# EUROPÄISCHE PATENTANMELDUNG

(11) **EP 1 471 621 A2**
(43) Veröffentlichungstag der Anmeldung: **27.10.2004**
(21) Anmeldenummer: 04006412.3
(22) Anmeldetag: 17.03.2004
(51) Int. Cl.: H02K 1/27

(54) **Rotorkörper für einen Elektromotor**

(30) Priorität: 24.04.2003 DE 10318624; 30.09.2003 DE 10345417
(71) Anmelder: MINEBEA CO., LTD., Kitasaku-gun, Nagano-ken (JP)
(72) Erfinder: Hans, Helmut, Dr., 78112 Sankt Georgen (DE)
(74) Vertreter: Liesegang, Eva

(57) **Zusammenfassung**

Die Erfindung betrifft einen Rotorkörper für einen Elektromotor mit einem im wesentlichen zylindrischen Rotorkern (22) mit einer zentralen Öffnung (28) und mit Permanentmagneten (30), die in den Rotorkern eingebettet sind und sich im wesentlichen speichenförmig durch den Rotorkern erstrecken, wobei die radial innen liegenden Enden ausgewählter benachbarter Permanentmagnete durch wenigstens einen Hilfsmagneten (74) magnetisch gekoppelt sind.

## Beschreibung

Die Erfindung betrifft einen Rotorkörper für einen Elektromotor mit einem im wesentlichen zylindrischen Rotorkem, der eine zentrale Öffnung aufweist, und mit Permanentmagneten, die in den Rotorkern eingebettet sind und sich im wesentlichen speichenförmig durch den Rotorkern erstrecken.

Allgemeiner betrifft die Erfindung das Gebiet der elektrischen Motoren, welche Permanentmagnete aufweisen, wie bürstenlose, elektronisch kommutierte Gleichstrommotoren und andere Permanentmagnetmotoren, und insbesondere solche, die als Innenläufer konfiguriert sind. Innenläufermotoren umfassen im allgemeinen eine Rotoranordnung, die auf der Motorwelle montiert ist und einen oder mehrere Permanentmagnete umfaßt, sowie eine Stator-anordnung, wie einen Statorkörper, der aus Metallblechen aufgebaut ist, welche Wicklungen tragen. Die Rotoranordnung ist in die Statoranordnung koaxial eingefügt. Bei Außenläufermotoren umgibt die Rotoranordnung den Stator.

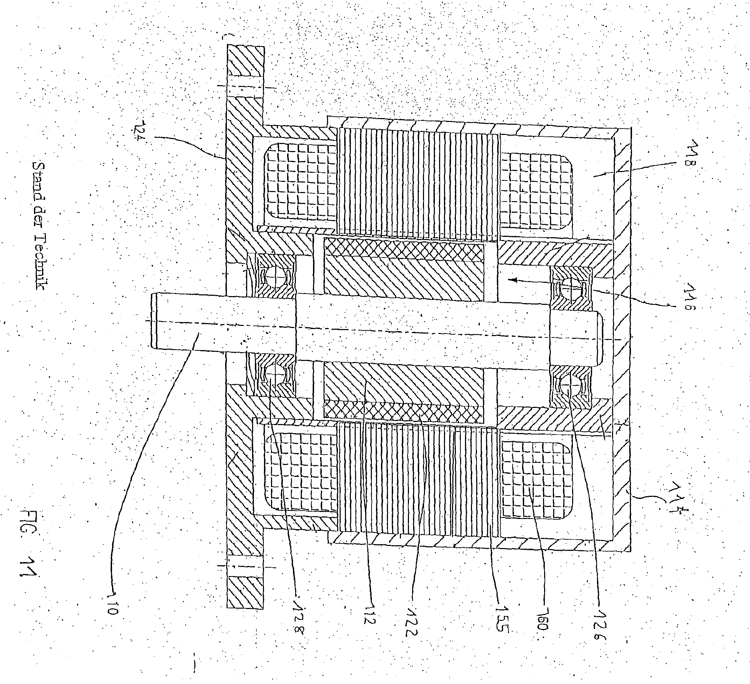

Fig. 11 zeigt grundsätzlich den Aufbau eines Elektromotors mit einem Gehäuse 114, in dem eine Statoranordnung 118, eine Rotoranordnung 116 sowie Lager 126, 128 zum drehbaren Lagern der Rotoranordnung aufgenommen sind. Die Statoranordnung 118 umfaßt paketierte Metallbleche 155 und Wicklungen 160 und grenzt einen Innenraum ein, in den die Rotoranordnung 116 eingefügt werden kann. Die Rotoranordnung 116 umfaßt die Motorwelle 110, einen Eisenrückschluß 112 und Permanentmagnete 122. Die Lager 126, 128 für die Lagerung der Rotoranordnung können in einen Flansch 124 des Motorgehäuses 114 integriert sein.

Fig. 11 dient der Erläuterung des grundsätzlichen Aufbaus eines Elektromotors,wobei der erfindungsgemäße Rotorkörper einen im wesentlichen zylindrischen Rotorkern aufweist, in welchen die Permanentmagnete eingebettet sind.

Rotoren mit eingebetteten Magneten sind nach dem Stand der Technik allgemein bekannt. Eine Rotorkonfiguration mit einer mehrpoligen speichenradartigen Ausführung mit sich radial erstreckenden eingebetteten Magneten ist z.B. gezeigt in "Design of Brushless PermanentMagnet Motors", J.R. Hendershot Jr. und TJE Miller, Magna Physics Publishing and Clarendon Press, Oxford, 1994. Wie in dieser Veröffentlichung gezeigt, ist es bekannt, einen Rotorkörper mit eingebetteten, sich radial erstreckenden Magneten herzustellen, die durch einen Ring oder ein Rohr geschützt werden, welches den Rotorkörper umgibt. Der Rotorkörper, in den die Magnete eingebettet sind dient als Rückschluß.

Eine übliche Form von Rotoren mit eingebetteten Magneten ist auch in EP 0 691 727 A1 gezeigt. Diese Veröffentlichung zeigt mehrere Permanentmagnete, die in Schlitze eingefügt sind, welche in dem Rotorkörper ausgebildet sind, um die Permanentmagnete von außen in den Rotorkörper einzuschieben. An ihren radial innen liegenden Enden sind die Permanentmagnete von dem Material des Rotorkerns umschlossen.

Rotoren mit eingebetteten Permanentmagneten haben grundsätzlich den Vorteil, daß die Magnete vollständig eingekapselt werden können, so daß der Rotor auch mit aggressiven Medien in Kontakt kommen kann, ohne daß das Magnetmaterial eines besonderen Oberflächenschutzes zur Vermeidung von z.B. Korrosion bedarf. Die beschriebene Rotorbauweise hat jedoch den Nachteil, daß ein Streufluß durch den Rotorkern in der Nähe der Welle erzeugt wird.

Um zu vermeiden, daß ein derartiger Streufluß entsteht, wurde im Stand der Technik vorgeschlagen, auf die Welle eine Hülse aus magnetisch nicht oder nur schlecht leitfähigem Material aufzubringen, an der dann die Flußleitstücke des Rotorkerns befestigt werden, zwischen denen wiederum die Permanentmagnete eingebettet sind. Eine solche Bauweise ist beispielsweise in EP 0 641 059 A1; EP 0 803 962 A1; und DE 101 00 718 A1 gezeigt. Dieser Aufbau ist zwar bezüglich des magnetischen Kreises und der Verteilung der Flußdichte im Rotorkörper wesentlich besser als der zuvor beschriebene Stand der Technik, er ist jedoch aufwendig in der Herstellung, und aufgrund der vielen Einzelteile können sich Probleme im mechanischen Aufbau, wie eine Addition von Toleranzen, ergeben.

Die EP 0803 962 A1 zeigt zusätzlich, daß die Schlitze zum Aufnehmen der Permanentmagneten an ihren Außenumfang eine Brücke aufweisen, um die Permanentmagnete nach außen hin vollständig zu schützen.

Die WO 00/57537 beschreibt einen mehrpoligen Permanentmagnet-Rotor für einen Elektromotor mit eingebetteten Magneten, die so angeordnet sind, daß sich eine Flußkonzentration ergibt. Die Permanentmagnete sind als flache Kuben ausgebildet, die speichenartig, radial zur Rotorachse in Ausnehmungen angeordnet sind, welche zwischen Flußleitstücken angeordnet sind, die am Rotorkörper befestigt sind. Für die Montage der Magnete und der Flußleitstücke werden jene als benachbarte Halb-Stücke für jeweils einen Pol ausgebildet, und Permanentmagnete und Flußleitstücke werden über eine Hülse an der Welle angebracht.

Das U.S. Patent 4,327,302 beschreibt einen Rotoraufbau mit eingebetteten Permanentmagneten zur Verwendung in einem Elektromotor. Der Rotorkörper ist aus paketierten, gestanzten Metallblechen zusammengesetzt, welche V-förmige Durchbrechungen aufweisen, wobei in die beiden Schenkel jeder Durchbrechung jeweils ein Permanentmagnet eingebettet ist, so daß sich die Permanentmagnete im wesentlichen speichenförmig durch den Rotorkern erstrecken. Im Scheitel der Durchbrechung sind jeweils zwei benachbarte Permanentmagnete durch einen Freiraum überbrückt, der mit Luft oder einem nicht-magnetischen Material gefüllt ist. Zweck der beschriebenen Anordnung ist, einen einfachen und kompakten Aufbau für einen Elektromotor mit einer großen Ausgangsleistung anzugeben.

Die EP 1 309 066 beschreibt einen Rotor für einen Elektromotor, der im wesentlichen, wie oben mit Bezug auf das U.S. Patent 4,327,302 beschrieben, aufgebaut ist. Die EP 1 309 066 möchte durch diesen Aufbau bei einfacher Konstruktion des Blechpakets den Streufluß über die Welle möglichst gering halten. Eine andere Bauweise eines Rotors mit eingebetteten Magneten ist in EP 0 872 944 A1 gezeigt. Die Magnete sind in einer radialen Richtung oder parallel zu einer radialen Richtung des Rotorkörpers angeordnet. In der EP 0 872 499 sind die Permanentmagnete in einer sogenannten Doppelspeichen-Konfiguration angeordnet. Diese "Doppelmagnete" umfassen jeweils ein Paar Permanentmagnete, deren Magnetisierungsrichtung im wesentlichen gleich ist. Sie können parallel zueinander angeordnet sein, wie in der genannten Druckschrift, oder unter einem Winkel zueinander geneigt sein. Durch diese Anordnung wird eine Verbesserung des Laufverhaltens des Elektromotors und insbesondere eine Reduktion Rastmomente und der Drehmomentwelligkeit erreicht.

Weitere Patent-Veröffentlichungen bezüglich Rotoren mit eingebetteten Magneten sind z.B. GB 1,177,247; EP 0 955 714 A2; und U.S. 2002/0067096 A1.

Die bevorzugte Anwendung des erfindungsgemäßen Rotorkörpers ist in einem bürstenlosen Gleichstrommotor oder einem anderen Permanentmagnet-Synchronmotor. Solche Motoren können in einer großen Vielzahl von Anwendungen eingesetzt werden, wie Spindelmotoren für Plattenlaufwerke, motorisch unterstützte Systeme in Kraftfahrzeugen, z.B. Lenk- und Bremssysteme, Elektrowerkzeuge und viele andere Anwendungen.

Mit der radialen Anordnung der in den Rotorkern eingebetteten Permanentmagnete ergibt sich das Problem eines Streuflußes im Bereich der Welle, auf welcher der Rotor sitzt. Die Welle ist üblicherweise aus Stahl und wirkt als ein zusätzlicher Rückschluß für den Magnetfluß durch den Rotorkern. Dadurch entstehen erhebliche magnetische Streuverluste. Diesem Problem kann dadurch begegnet werden, daß auf die Welle eine Hülse aus einem nicht oder nur schwach magnetisch leitfähigem Material aufgebracht wird, an der die Flußleitstücke des Rotorkerns befestigt werden, zwischen denen wiederum die Permanentmagnete eingebettet sind. Diese Bauweise ist relativ aufwendig und erfordert zusätzliche Einzelteile.

In der oben genannten EP 1 309 066 ist vorgeschlagen, zur Reduktion der Streuflüsse über die Welle den Rotor als Blechpaket so aufzubauen, daß das ringförmige Stanzblech gleichmäßig kreisförmig verteilte, V-förmige Ausstanzungen aufweist. Die Schenkel der Ausstanzungen weisen radial nach außen, und in jeden Schenkel der U-förmigen Ausstanzung ist ein Permanentmagnet eingebracht. Zwischen den radial innen liegenden Enden der Permanentmagnete innerhalb einer Ausstanzung ist ein Luftspalt gebildet, welcher Streuflüsse zur Motorwelle dämpft. Untersuchungen der Anmelderin haben ergeben, daß bei diesem Aufbau noch immer ein nicht vernachlässigbarer Streufluß auftritt.

Der Erfindung liegt die Aufgabe zugrunde, ein Rotorkörper für einen Elektromotor anzugeben, der eingebettete Magnete aufweist, einfach herzustellen ist und gleichwohl die oben beschriebenen Probleme der Erzeugung von Streuflüssen im Bereich der Motorwelle vermeidet.

Diese Aufgabe wird durch einen Rotorkörper mit den Merkmalen von Anspruch 1 gelöst.

Der erfindungsgemäße Rotorkörper weist einen im wesentlichen zylindrischen Rotorkern mit einer zentralen Öffnung auf. Permanentmagnete sind in den Rotorkern eingebettet und erstrecken sich im wesentlichen speichenförmig durch den Rotorkern. Erfindungsgemäß sind ausgewählte benachbarte Permanentmagnete an ihren radial innen liegenden Enden durch wenigstens einen Hilfsmagnet magnetisch gekoppelt.. Wie beschrieben, besteht bei den Rotorkernen des Standes der Technik das Problem, daß im Bereich der Welle, an den radial innen liegenden Enden der Permanentmagnete ein teilweise erheblicher Streufluß erzeugt wird. Der Erfindung liegt die Überlegung zugrunde, die magnetischen Flußlinien dort, wo die Gefahr der Bildung unerwünschter Streufelder groß ist, umzulenken und in die gewünschte Richtung, d.h. nach radial außen zum Stator zu lenken. Die Hilfsmagnete werden vorzugsweise derart magnetisiert und angeordnet, daß sie die Magnetfeldlinien im Zwischenraum zwischen den benachbarten Permanentmagneten konzentrieren, wodurch sich wiederum der Magnetfluß zwischen dem Rotor und dem Stator und damit die Effektivität des Elektromotors erhöht. Dadurch können Streuverluste erheblich reduziert werden. Darüberhinaus werden die magnetischen Feldlinien verstärkt in den Außenbereich des Rotorkörpers geleitet, wodurch die Effektivität des Elektromotors zunimmt. Abhängig von dem Aufbau des Rotorkörpers können ein oder mehrere Hilfsmagnete für zur Kopplung jeweils eines Paares benachbarter Permanentmagnete vorgesehen sein.

In einer bevorzugten Ausführung der Erfindung werden jeweils die radial innen liegenden Enden benachbarter Permanentmagnete durch eine Aussparung in dem Rotorkern überbrückt, wobei der Hilfsmagnet zur magnetischen Kopplung dieser Permanentmagnete in der Aussparung angeordnet ist. Die Aussparung ist grundsätzlich mit Luft oder einem anderen schlecht magnetisch leitenden Material gefüllt, wobei die Hilfsmagnete die Aussparung teilweise oder ganz füllen können und in entsprechendem Umfang die Luft oder das magnetisch schlecht leitende Material ersetzen. Die Wirkung der Hilfsmagnete ist, daß die Magnetfeldlinien im Zwischenraum zwischen jeweils den benachbarten Permanentmagnete konzentriert werden.

In einer anderen Ausführungsform kann jeweils ein Hilfsmagnet die radial innen liegenden Enden jeweils zweier benachbarter Permanentmagnete auch vollständig überbrücken. In einer besonderen Ausführung sind hierzu der Hilfsmagnet und die zugehörigen benachbarten Permanentmagnete einteilig ausgebildet. Zu diesem Zweck werden vorzugsweise V-förmige Magnete verwendet. Dadurch ergibt sich ein besonders einfacher Aufbau.

Die Aussparung kann durch einen umlaufenden Steg bei der zentralen Öffnung des Rotorkerns, die radial innen liegenden Enden der zugehörigen benachbarten Permanentmagnete und radiale Seitenstege derart eingegrenzt sein, daß sie zum Zentrum des Rotorkerns hin geschlossen oder offen ist. Dies wird dadurch erreicht, daß der umlaufende Steg entweder durchgehend oder mit Unterbrechungen ausgebildet ist. Die Ausführung mit durchgehendem Innensteg hat den Vorteil, daß der Rotorkörper am Innenring, wo er auf die Welle aufgebracht wird stabil und die Permanentmagnete vollständig eingebettet und geschützt sind.

In einer weiteren Ausführung der Erfindung sind die benachbarten Permanentmagnete durch eine Aussparung in dem Rotorkern überbrückt, wie oben beschrieben, wobei der oder die Hilfsmagnete jedoch nicht in der Aussparung angeordnet sind, sondern in den umlaufenden inneren Steg bei der zentralen Öffnung des Rotorkerns integriert sind. Insbesondere weist der umlaufende Steg hierzu Unterbrechungen auf, in welche die Hilfsmagnete eingebracht werden können. Dadurch wird ein insgesamt geschlossener Innenring des Rotorkörpers gebildet.

Besonders zweckmäßig ist es, wenn die in dem Rotorkern speichenförmig angeordneten Permanentmagnete jeweils zu Paaren zusammengefaßt werden und jeweils ein Paar benachbarter Permanentmagnete durch einen (oder mehrere) Hilfsmagnete magnetisch gekoppelt wird. Die Permanentmagnete eines Paares können gleichsinnig oder gegensinnig magnetisiert sein.

In einer vorteilhaften Ausführung der Erfindung sind die Permanentmagnete nach Art von Doppelspeichen in Paaren gleichsinnig magnetisierter Permanentmagnete in dem Rotorkern angeordnet, wobei jeweils benachbarte Paare an den radial innen liegenden Enden zweier benachbarter Permanentmagnete durch einen Hilfsmagnet magnetisch gekoppelt sind.

Der bzw. die Hilfsmagneten sind vorzugsweise in radialer Richtung magnetisiert, um die Magnetfeldlinien in dem Zwischenraum zwischen den ausgewählten benachbarten Permanentmagneten zu konzentrieren. Hierbei können benachbarte Hilfsmagnete wahlweise gleichsinnig oder gegensinnig magnetisiert sein.

In einer Ausführungsform der Erfindung ist vorgesehen, daß die Permanentmagnete wenigstens an ihren radial innen liegenden Enden oder an ihren radial außen liegenden Enden von dem Rotorkern umschlossen sind, um einen einteiligen, zusammenhängenden Rotorkern zu bilden. Wenn der Innenring der Flußleitstücke zur Welle hin unterbrochen ist, ergeben sich gleichwohl zusammenhängende Flußleitstücke, sofern die Permanentmagnete an der Außenseite des Rotorkörpers umschlossen sind. Es kann jedoch auch vorgesehen sei, daß der Rotorkörper Ausnehmungen oder Ausstanzungen für die Permanentmagnete aufweist, die radial nach außen offen sind, d.h., die Permanentmagnete werden an der Außenseite des Rotorkörpers nicht vollständig von den Flußleitstücken umfaßt. Dann sind die Flußleitstücke nicht mehr einteilig miteinander verbunden. Diese Ausführung hat jedoch den Vorteil, daß der Magnetfluß an der Außenseite des Rotors noch stärker konzentriert wird, wodurch die Effektivität und maximale Leistung des Motors weiter erhöht wird.

In einer anderen Ausführungsform der Erfindung sind die Permanentmagnete an ihren radial außen liegenden Enden von dem Rotorkern vollständig umschlossen. Dadurch erhält man einen Rotorkörper mit vollständig eingebetteten Rotormagneten, so daß der Rotor ohne Probleme auch mit aggressiven Medien in Kontakt gelangen kann. Es kann eine größere Vielzahl von Magnetmaterialien eingesetzt werden, und insbesondere auch solche Materialien, die bei freiliegenden Magneten einen zusätzlichen Oberflächenschutz benötigen würden.

Der Rotorkern besteht aus einem ferromagnetischen Material, vorzugsweise aus Stanzblechen, welche paketiert werden, um Wirbelströme zu vermeiden. Alternativ können Ferritmaterialien verwendet werden. Der Rotorkern kann so aufgebaut sein, daß er Schlitze aufweist, in welche die Permanentmagnete seitlich eingeschoben werden. Anschließend wird der Rotorkern seitlich verschlossen, so daß die Magnete hermetisch abgeschlossen sind und daher nicht oberflächenbeschichtet werden müssen. Als Magnetmaterialien werden beispielsweise Neodym-Eisen-Bor (NbFeB)- oder Samarium-Kobalt (SmCo)-Magnete verwendet. Um eine Korrosion dieser Materialien zu verhindern, müssen sie in der Regel beschichtet werden. Durch die vollständige Einbettung in den Rotorkern ist dies nicht nötig. Ferner wird durch das vollständige Einbetten der Permanentmagnete in den Rotorkern ein zusätzlicher mechanischer Schutz der Permanentmagnete erzielt.

Die Erfindung ist auch anwendbar auf einen Außenläufermotor. In dieser Konstellation werden die Aussparungen, welche zwei benachbarte Permanentmagnete überbrücken, in der Nähe des äußeren Umfangs des Rotorkerns vorgesehen.

Die Erfindung ist im folgenden anhand bevorzugter Ausführungsformen mit Bezug auf die Zeichnungen näher erläutert. In den Figuren zeigt:
- Fig. 1: eine schematische Schnittdarstellung durch einen Rotorkörper, der bezogen auf den magnetischen Kreis ideal ist;
- Fig. 2a: zeigt eine schematische Schnittdarstellung durch einen Rotorkörper , der einen Ausgangspunkt für die Erfindung darstellt und in der nicht vorveröffentlichten Anmeldung DE 103 18 624 beschrieben ist;
- Fig. 2b: zeigt eine ähnliche Darstellung wie Fig. 2a, wobei Flußlinien eingezeichnet sind;
- Fig. 3a: zeigt eine schematische Schnittdarstellung durch einen Rotorkörper, der eine Abwandlung der Fig. 2a ist und in der nicht vorveröffentlichten Anmeldung DE 103 18 524 beschrieben ist;
- Fig. 3b: zeigteine ähnliche Darstellung wie Figur 3a, wobei Flußlinien eingezeichnet sind;
- Fig. 3c: zeigt eine schematische Schnittdarstellung durch einen Rotorkörper , der eine Abwandldung der Fig. 3a ist;
- Fig. 4a: zeigt eine schematische Schnittdarstellung durch einen Teil eines Rotorkörpers, der einen anderen Ausgangspunkt für die Erfindung darstellt und in der nicht vorveröffentlichten Anmeldung DE 103 18 624 beschrieben ist;
- Fig. 4b: zeigt eine ähnliche Darstellung wie Fig. 4a, wobei Flußlinien eingezeichnet sind;
- Fig. 5a: zeigt eine schematische Schnittdarstellung durch einen Teil eines Rotorkörpers gemäß einer ersten Ausführung der Erfindung;
- Fig. 5b: zeigt eine ähnliche Darstellung wie Fig. 5a, wobei Flußlinien eingezeichnet sind;
- Fig. 6a: zeigt eine schematische Schnittdarstellung durch einen Teil eines Rotorkörpers gemäß einer zweiten Ausführung der Erfindung;
- Fig. 6b: zeigt eine ähnliche Darstellung wie Fig. 6a, wobei Flußlinien dargestellt sind;
- Fig. 7a: zeigt eine schematische Darstellung durch einen Teil eines Rotorkörpers gemäß einer dritten Ausführung der Erfindung;
- Fig. 7b: zeigt eine ähnliche Darstellung wie Fig. 7a, wobei Flußlinien eingezeichnet sind;
- Fig. 8: zeigt eine schematische Schnittdarstellung durch einen Teil eines Rotorkörpers gemäß einer vierten Ausführung der Erfindung;
- Fig. 9a: zeigt eine schematische Schnittdarstellung durch einen Teil eines Rotorkörpers gemäß einer fünften Ausführung der Erfindung;

- Fig. 9b: zeigt eine schematische Schnittdarstellung durch einen Teil eines Rotorkörpers gemäß einer Abwandlung der fünften Ausführung der Erfindung;
- Fig. 9c: zeigt eine ähnliche Darstellung wie Fig. 9b, wobei Flußlinien eingezeichnet sind;
- Fig. 10a: zeigt eine schematische Schnittdarstellung durch einen Teil eines Rotorkörpers gemäß einer sechsten Ausführung der Erfindung;
- Fig. 10b: zeigt eine ähnliche Darstellung wie Fig. 10a, wobei Flußlinien eingezeichnet sind;
- Fig. 11: zeigt eine Schnittdarstellung durch einen Elektromotor gemäß dem Stand der Technik.

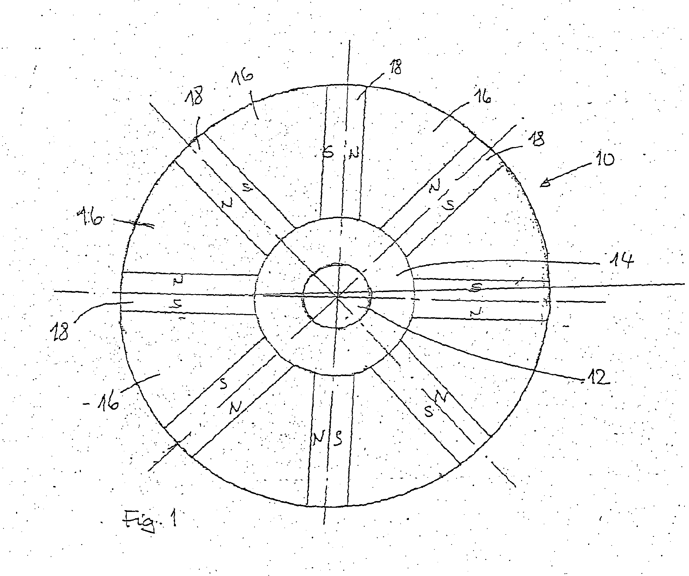

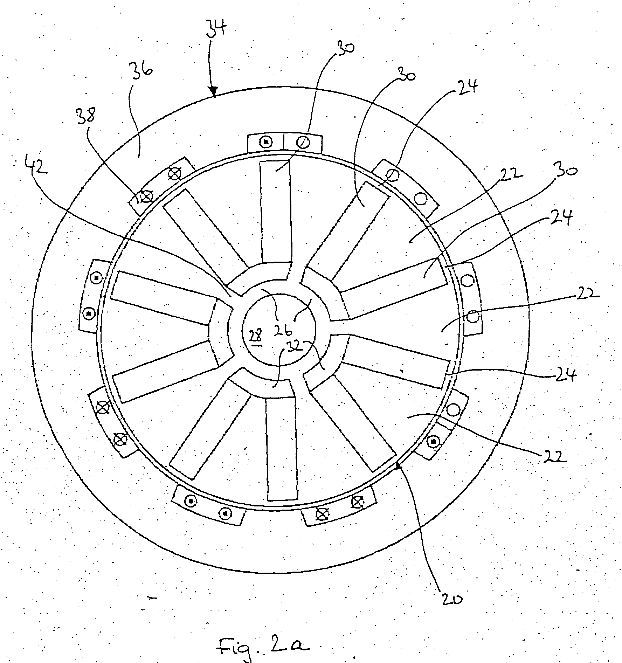

Fig. 1 zeigt eine schematische Schnittdarstellung durch einen Rotorkörper, der bezogen auf den magnetischen Kreis ideal aufgebaut ist. Der Rotorkörper 10 ist auf eine Welle 12, die üblicherweise aus Stahl besteht, aufgebracht. Zu diesem Zweck wird eine Hülse 14 auf die Welle 12 aufgeklebt oder gepreßt, und an der Hülse 14 werden Flußleitstücke 16 befestigt, zwischen denen Permanentmagnete 18 eingebettet sind. Die Hülse 14 hat die Funktion, magnetischen Streufluß zwischen den Flußleitstücken 16 und der Welle 12 zu verhindern. Hierzu ist sie aus einem nicht-magnetischen oder nur schlecht magnetisch leitfähigen Material hergestellt. Mit Hilfe der Hülse 14 kann somit erreicht werden, daß im Bereich der Welle 12 praktisch keine magnetischen Verluste entstehen. Dieser in Fig. 1 gezeigte Aufbau des Rotorkörpers 10 ist somit ideal bezogen auf den magnetischen Kreis. Er hat jedoch den Nachteil, daß er viele Einzelteile benötigt, durch die der mechanische Aufbau kompliziert und aufwendig wird.

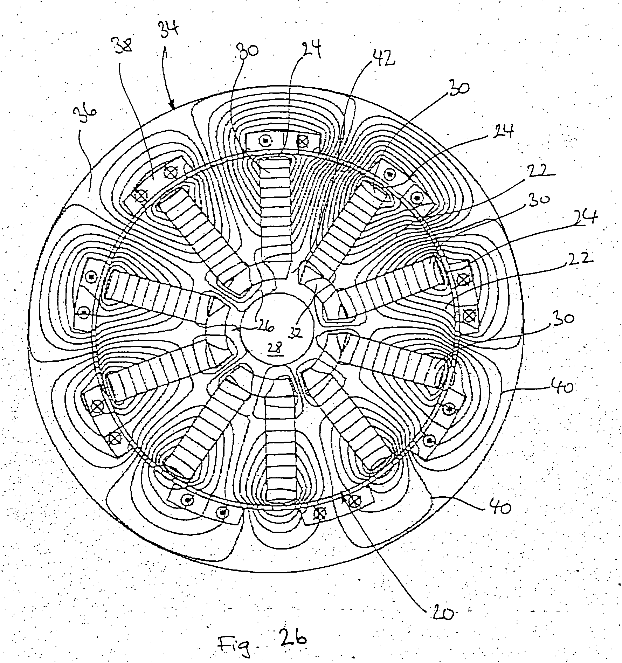

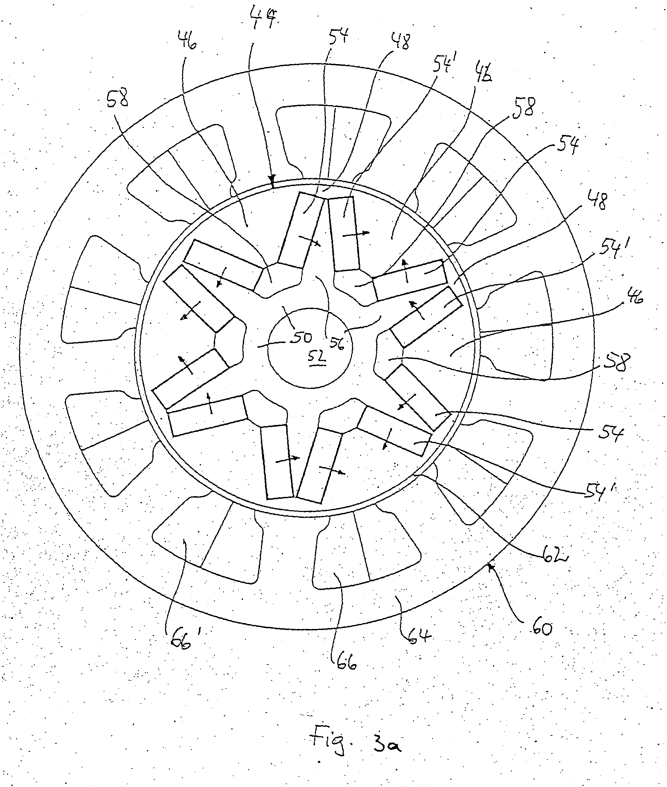

Fig. 2a zeigt eine schematische Schnittdarstellung durch einen Rotorkörper, der einen Ausgangspunkt für die Erfindung darstellt. Der Rotorkörper 20 umfaßt Flußleitstücke 22, welche über äußere und innere Stege 24, 26 am äußeren Umfang bzw. bei einer zentralen Öffnung 28 des Rotorkörpers 20 zusammenhängen. Die innen liegenden Stege 26 bilden bei der gezeigten Ausführung einen geschlossenen Ring und grenzen dadurch die zentrale Öffnung 28 ein. Zwischen den Flußleitstücken 22 sind Permanentmagnete 30 eingebettet, welche sich speichenförmig in radialer Richtung durch den Rotorkörper 20 erstrecken.

Die außen liegenden Stege 24 haben die Funktion, die Permanentmagnete 30 nach außen hin vollständig in den Rotorkörper 20 einzubetten und zu schützen, so daß die Permanentmagnete 30 nicht mit dem Umgebungsmedium des Rotorkörpers 20 in Kontakt kommen können. Eine ähnliche Funktion haben auch die innen liegenden Stege 26. Die innenliegenden Stege 26 sorgen für eine verdrehfeste Verbindung des Rotorkörpers 20 mit der Welle 12. Die Stege 24, 26 verbinden die Flußleitstücke 22, so daß der Rotorkörper 20 einen einteiligen zusammenhängenden Körper bildet.

Bei der in Figur 2a gezeigten, Ausführungsform bilden die innen liegenden Stege 26 einen geschlossenen Ring, so daß der Rotorkörper 20 direkt, ohne Zwischenschaltung einer Hülse, auf die Welle (nicht gezeigt) aufgebracht, z.B. aufgepreßt oder aufgeklebt, werden kann.

Die innen liegenden Stege 26 sind über kurze radiale Stege 42 mit den Flußleitstücken 22 verbunden und grenzen jeweils eine Aussparung 32 ein. Bei der in Figur 2 gezeigten Ausführung überbrückt jede Aussparung 32 zwei benachbarte Permanentmagnete 30, wobei in dieser Ausführung die innen liegenden Stege 26 jeweils gleichnamige Pole der Permanentmagnete 30 verbinden. Bei der in Fig. 2 gezeigten Ausführungsform verbinden die Stege 26 die S-Pole. Selbstverständlich könnten die innen liegenden Stege auch jeweils nur die N-Pole verbinden. Dadurch ergibt sich eine Gestaltung des Rotorkörpers 20, bei der die Stege 26 jeweils die radial innen liegenden Enden zweier Permanentmagnete 30 überbrücken und dabei die Aussparung 32 eingrenzen, die mit Luft oder einem anderen nicht oder nur schwach magnetisch leitfähigem Medium gefüllt sein kann.

Durch die gezeigte Ausgestaltung des Rotorkörpers 20, und insbesondere durch die gezielte Ausgestaltung und Anordnung der Aussparungen 32, können Streuflüsse im Inneren des Rotorkörpers 20, also bei den innen liegenden Stegen 26 und der zentralen Öffnung 28 in gewissem Maße vermieden werden. Hieraus resultiert ein geringerer magnetischer Verlust als bei den üblichen Rotorkörpern mit eingebetteten Magneten, welche ohne die Hülse 14 der Fig. 1 aufgebaut sind.

Die Flußleitstücke 22 bestehen aus ferromagnetischem Material und sind vorzugsweise aus Stanzblechen hergestellt, welche paketiert werden, um Wirbelströme zu vermeiden. Alternativ können sie aus Ferritmaterial hergestellt sein. Die Flußleitstücke 22 des Rotorkörpers 20 können als ein zusammenhängendes Bauteil hergestellt werden, in welches die Magnete 30 seitlich eingeschoben werden. Anschließend wird der Rotorkörper 20 verschlossen, so daß die Magnete hermetisch abgeschlossen sind und nicht oberflächenbeschichtet werden müssen.

Der Rotorkörper 20 ist von einem Stator 34 umgeben, der einen Statorkörper 36 und Statorwicklungen 38 umfaßt. Der Statorkörper 36 kann wiederum aus Stanzblechen bestehen, welche paketiert werden, wie im Stand der Technik allgemein bekannt ist.

Als Magnetmaterialien können sämtliche permanentmagnetische Materialien verwendet werden. Beispiele sind Neodym-Eisen-Bor (NbFeB) und Samarium-Kobalt (SmCo), und auch kunststoffgebundene Magnetmaterialien.

Fig. 2b zeigt eine schematische Schnittdarstellung durch den Rotorkörper der Fig. 2a.. Zur Erläuterung des Effektes der Aussparungen 32 sind in Fig. 2b Flußleitlinien 40 eingezeichnet. Dieselben Komponenten wie in Fig. 2a sind mit denselben Bezugszeichen bezeichnet und nicht nochmals im Einzelnen beschrieben.

In Fig. 2b sind magnetische Flußlinien 40 eingezeichnet, wobei die magnetische Feldstärke um so größer ist, je dichter die Flußlinien beabstandet sind, so daß aus der Figur erkennbar ist, daß der magnetische Fluß im Bereich der Aussparungen 32 sehr gering ist. Dadurch tritt im Betrieb nur ein geringer Streufluß zwischen dem Rotorkörper 20 und der Welle, auf welche er aufgebracht ist, auf,ohne daß eine gesonderte Hülse zwischen Rotor und Welle vorgesehen werden muß. Dadurch können Verluste gering gehalten werden.

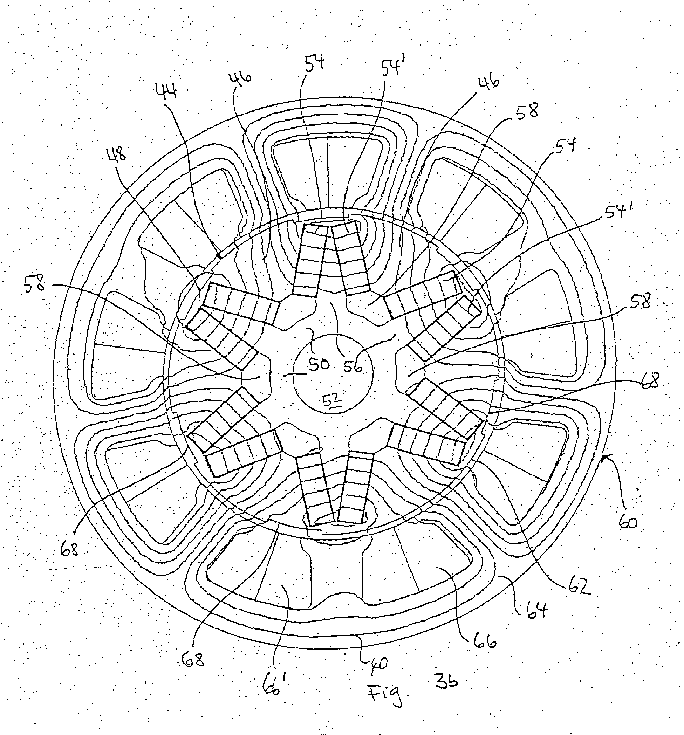

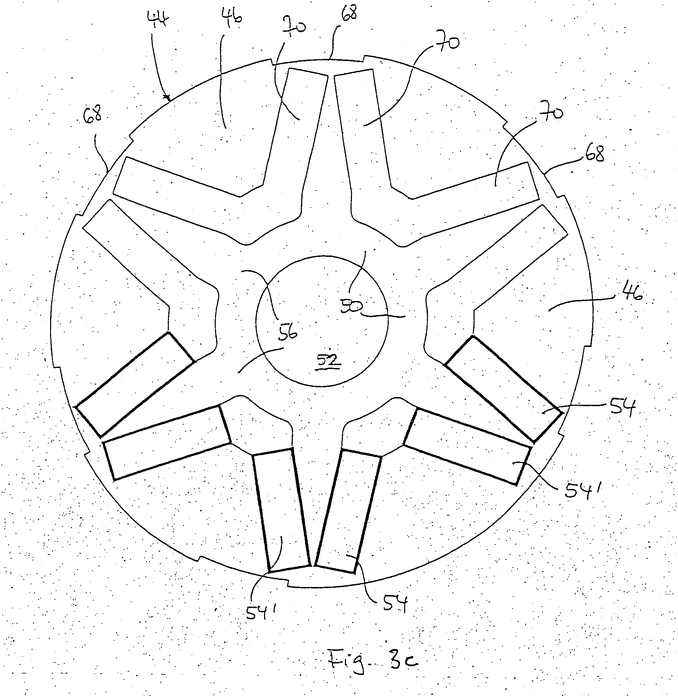

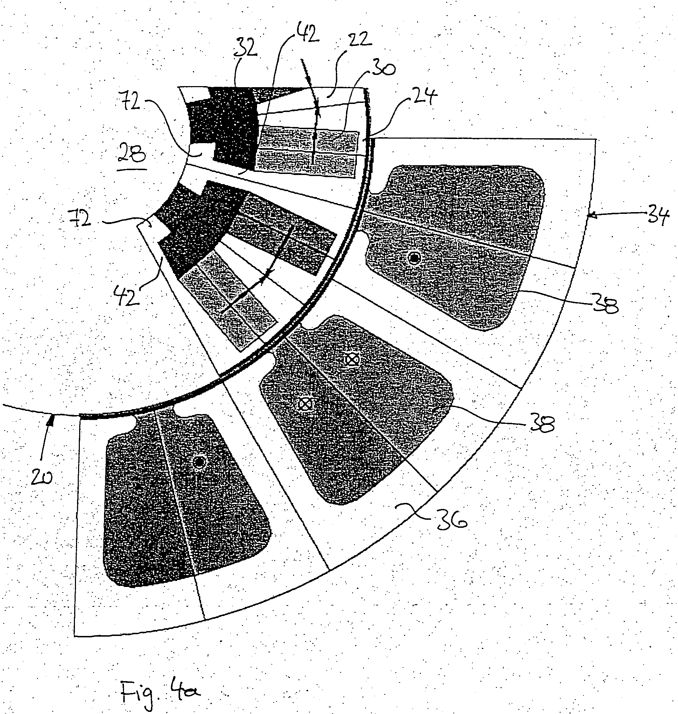

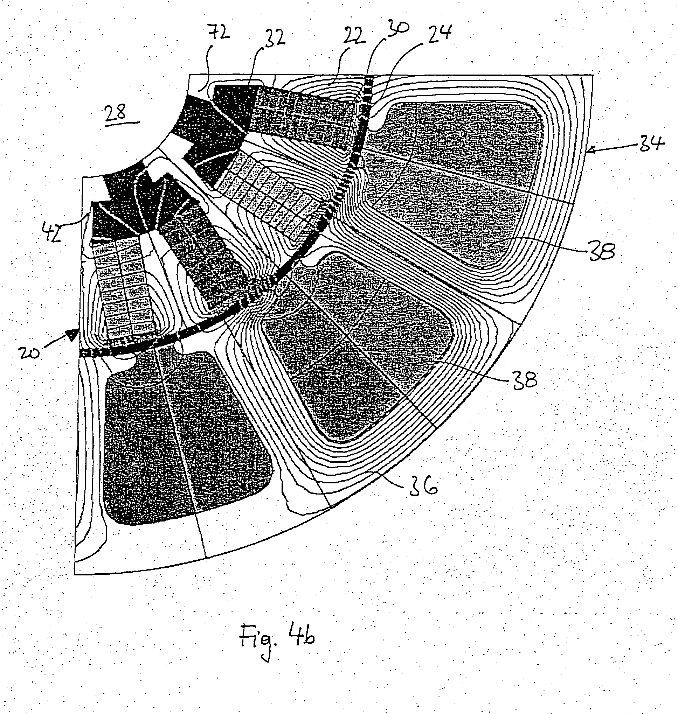

Figur 3a zeigt eine schematische Schnittdarstellung durch eine weitere Ausführung des Rotorkörpers, der Grundlage für die Erfindungist. Der Rotorkörper 44 umfaßt Flußleitstücke 46, welche über äußere und innere Stege 48 bzw. 50 am äußeren Umfang bzw. bei einer zentralen Öffnung 52 des Rotorkörpers 44 verbunden sind, um einen zusammenhängenden Körper zu bilden. Die innen liegenden Stege 50 bilden bei der gezeigten Ausführung einen geschlossenen Ring und grenzen die zentrale Öffnung 52 ein. Zwischen den Flußleitstücken 46 sind Permanentmagnete 54, 54' eingebettet, welche sich nach Art von Doppelspeichen im wesentlichen in radialer Richtung durch den Rotorkörper 44 erstrecken. Jeweils zwei unmittelbar benachbarte Permanentmagnete 54, 54' bilden ein Permanentmagnetpaar, wobei die Permanentmagnete 54, 54' eines Paares, relativ zu dem Radius des Rotorkörpers 44, in einem Winkel zueinander geneigt sind. In einer anderen Ausführung, die nicht gezeigt ist, könnten die Permanentmagnete eines Paares auch parallel zueinander angeordnet sein. Die Permanentmagnete 54, 54' eines Paares haben jeweils im wesentlichen dieselbe Magnetisierungsrichtung, d.h. Anordnung von Nord- und Südpolen, was durch die Pfeile in Figur 4 angedeutet ist. Dadurch bilden sich zwischen den Permanentmagneten 54, 54' eines Paares keine Pole aus, sondern die magnetischen Feldlinien verbinden die inneren Seiten der Permanentmagnete eines Paares auf kürzestem Weg, wie aus Figur 3b ersichtlich ist. Die Permanentmagnete 54, 54' eines Paares wirken im wesentlichen jeweils wie ein Doppelmagnet, wodurch das von den Magneten erzeugte Feld gegenüber der Ausführung der Figur 2a verstärkt werden kann. Die Anordnung der Permanentmagnete unter einem Winkel dient zur Verbesserung des Drehmomentes und insbesondere zur Unterdrückung von Rastmomenten (cogging torque).

Die Funktion der Stege 48, 50 zum Schutz der eingebetteten Permanentmagnete 54, 54' und zur direkten Montage des Rotorkörpers 44 auf einer Welle ist im wesentlichen wie mit Bezug auf Figur 2 beschrieben. Ferner grenzen die Stege 50 in Verbindung mit kurzen radialen Stegen 56 Aussparungen 58 ein, welche jeweils benachbarte Permanentmagnete 54, 54' benachbarter Permanentmagnetpaare überbrücken. Die innen liegenden Stege 50 verbinden bei der gezeigten Ausführung jeweils die Zwischenräume zwischen den Permanentmagneten 54, 54' eines Permanentmagnetpaares. Die Wirkung der dadurch gebildeten Aussparungen 58 ist wie in bezug auf die Figuren 2a und 2b beschrieben und wie im folgenden noch in bezug auf Figur 3b erläutert.

Auch bei der Ausführung der Figur 3a bestehen die Flußleitstücke 46 aus ferromagnetischem Material und sind vorzugsweise aus Stanzblechen hergestellt, welche paketiert werden, um Wirbelströme zu vermeiden. Vorzugsweise sind die Flußleitstücke 46 des Rotorkörpers 44 als ein zusammenhängendes Bauteil hergestellt.

Der in Figur 3a gezeigte Rotorkörper 44 ist von einem Stator 60 unter Bildung eines Arbeitsluftspaltes 62 zwischen dem Stator 60 und dem Rotorkörper 44 umgeben. Der Stator 60 umfaßt einen Statorkörper 64 mit zugehörigen Statorpolen, auf welche Phasenwicklungen 66, 66' aufgebracht sind. Der Statorkörper 64 kann seinerseits aus Stanzblechen hergestellt sein, welche paketiert werden, wie im Stand der Technik grundsätzlich bekannt ist.

Figur 3b zeigt eine ähnliche schematische Schnittdarstellung durch den Rotorkörper 44 der Fig. 3a, wobei entsprechende Komponenten mit denselben Bezugszeichen wie in Figur 3a bezeichnet sind. Zur Erläuterung der Wirkung der Aussparungen 58 sind in Figur 3b Flußlinien eingezeichnet.

Eine Abwandlung der Ausführung der Figur 3a ist in Figur 3c gezeigt, wobei im Bereich der äußeren Stege 48 Einkerbungen 68 am Außenumfang des Rotorkörpers 44 vorgesehen, die gleichmäßig oder ungleichmäßig über den Umfang des Rotorkörpers 44 verteilt sind. Diese Einkerbungen 68 verbessern im Betrieb das Drehmoment des Elektromotors und reduzieren insbesondere das Rastmoment nochmals gegenüber den zuvor erörterten Ausführungen.

Aus Fig. 3c ist ferner erkennbar, daß der Rotorkörper dadurch hergestellt werden kann, daß Schlitze 70 zur Aufnahme der Permanetmagnete 54, 54' in dem Rotorkörper 44 ausgebildet werden , wobei die Permanentmagnete in diese Schlitze 70 eingefügt werden und der Rotorkörper 44 anschließend verschlossen wird.

Eine weitere Ausführung eines Rotorkörpers, der einen Ausgangspunkt für die Erfindung ist, ist schematisch in Figur 4a dargestellt. Diese Ausführung entspricht im wesentlichen der mit Bezug auf Figur 2a beschriebenen Ausführungsform, wobei die radial innen liegenden Stege jedoch keinen geschlossenen Ring bilden. Entsprechende Komponenten wie in Figur 2a sind mit denselben Bezugszeichen gekennzeichnet.

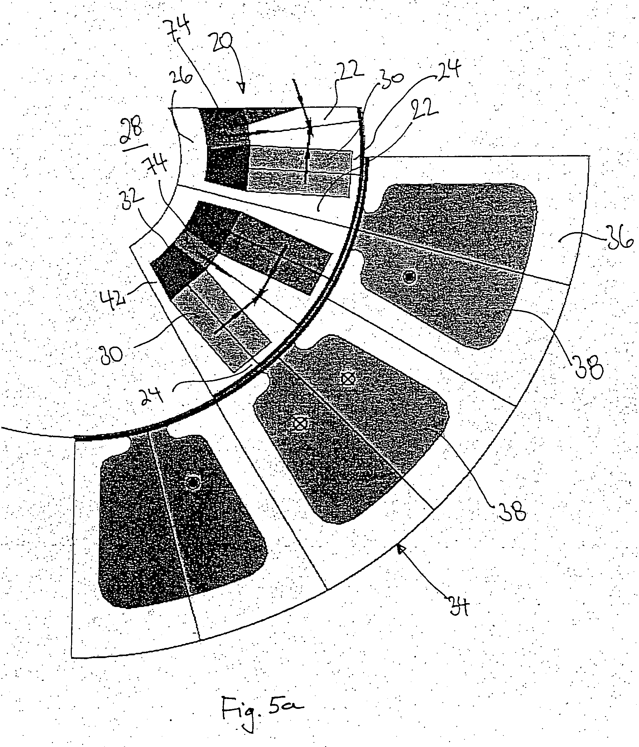

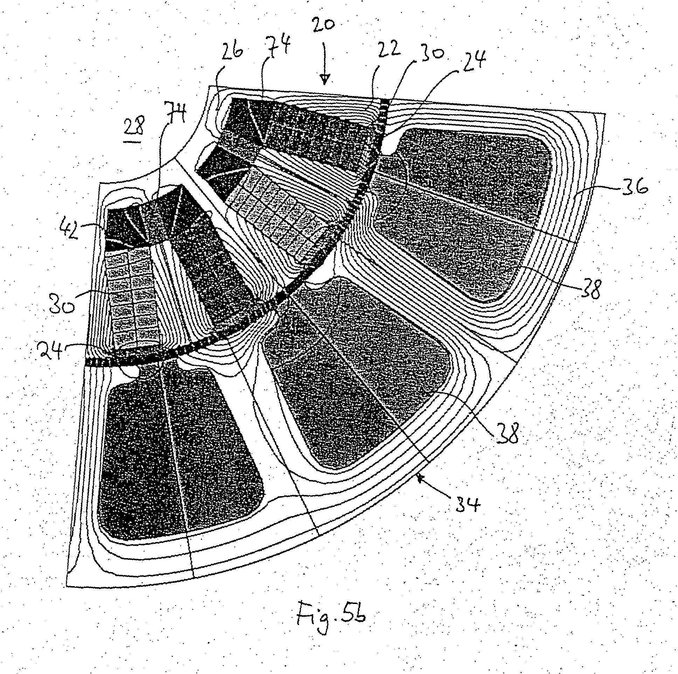

Bei der Ausführungsform der Figur 4a werden die Aussparungen 32 durch die kurzen radialen Stege 42 sowie durch Stegstummel 72 eingegrenzt, welche an die zentrale innere Öffnung 28 des Rotorkörpers 20 angrenzen. Ein zusammenhängender Rotorkörper 20, bei dem sämtliche Flußleitstücke 22 verbunden sind, wird durch die äußeren Stege 24 gewährleistet. Obwohl die radial innen liegenden Stege bzw. Stegstummel 72 nicht miteinander verbunden sind, wird durch die Aussparungen 32 dieselbe Unterdrückung von Streuflüssen zwischen Rotorkörper 20 und Welle erreicht, wie oben in bezug auf die vorhergehenden Ausführungen beschrieben. Fig. 4b zeigt den Verlauf des magnetischen Flusses in dieser Ausführungsform.Fig. 5a zeigt schematisch eine Schnittdarstellung durch einen Teil eines Rotorkörpers gemäß der Erfindung, wobei die Ausführung der Fig. 5a auf der in Fig. 2a gezeigten Gestaltung des Rotorkörpers basiert. Entsprechende Komponenten sind mit denselben Bezugszeichen bezeichnet und nicht nochmals im einzelnen beschrieben.

Bei der gezeigten Ausführung der Fig. 5a ist in die Aussparung 32 ein Hilfsmagnet 74 eingefügt, der mittig zwischen zwei benachbarten Permanentmagneten 30 angeordnet ist. Die Magnetisierungsrichtung der Permanentmagneten 30 und des Hilfsmagneten 74 sind durch Pfeile (N→ S) angedeutet. Die geometrische Anordnung der Permanentmagnete 30 sowie ihre Magnetisierung korrespondiert mit der Ausführung der Fig. 2b. Ein Fachmann wird erkennen, daß die erfindungsgemäße Ausgestaltung des Rotorkörpers in verschiedensten Konstellationen von Rotoren mit eingebetteten Permanentmagneten eingesetzt werden kann.

Bei der in Fig. 5a gezeigten Ausführung der Erfindung füllt jeder Hilfsmagnet 74 nur einen Teil einer Aussparung 32 aus. Die Hilfsmagnete 74 haben die Funktion, den Streufluß auf der radial innen liegenden Seite der Permanentmagnete 30 weiter zu reduzieren. Die Wirkung der Hilfsmagnete 74 wird anhand von Fig. 5b deutlich, die der Darstellung der Fig. 5a entspricht, wobei die im Betrieb erzeugten Magnetflußlinien eingezeichnet sind. Wie aus Fig. 5b erkennbar, konzentrieren die Hilfsmagnete 74 die Magnetflußlinien im Zwischenraum zwischen zwei benachbarten Permanentmagneten 30 und lenken diese in die gewünschte Richtung, d.h., nach außen zum Stator 34. Da die ferromagnetischen Flußleitstücke 24 des Rotors 20 auf der dem Stator zugewandten Seite der Permanentmagnete 30 im Betrieb in der Regel bereits in der Sättigung sind, erhöht sich aufgrund der Hilfsmagnete 74 der Magnetfluß in den Zwischenräumen zwischen den Permanentmagneten 30, wodurch sich wiederum der Magnetfluß zwischen dem Rotor 20 und dem Stator 34 und damit die Effektivität des Elektromotors insgesamt erhöht.

Ein weiterer Vorteil der in Fig. 5a gezeigten Ausführung ist, daß der Rotorkörper 20 zusammenhängende Flußleitstücke aufweist und somit einteilig ausgebildet werden kann. Der Hilfsmagnet 74 kann seitlich in die Aussparung 32 in dem Rotorkörper 20 eingeschoben und darin durch Kleben, Ausgießen der restlichen Aussparung 32, Verspannen oder auf andere Weise fixiert werden.

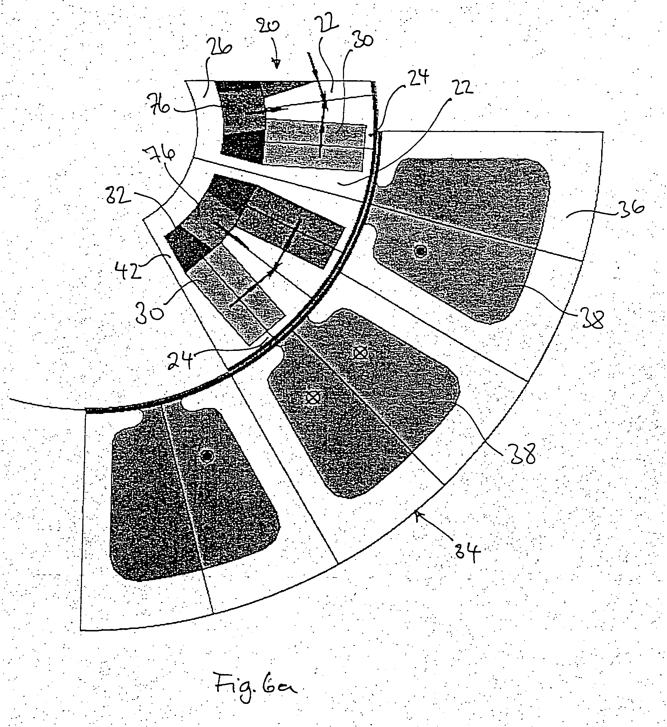

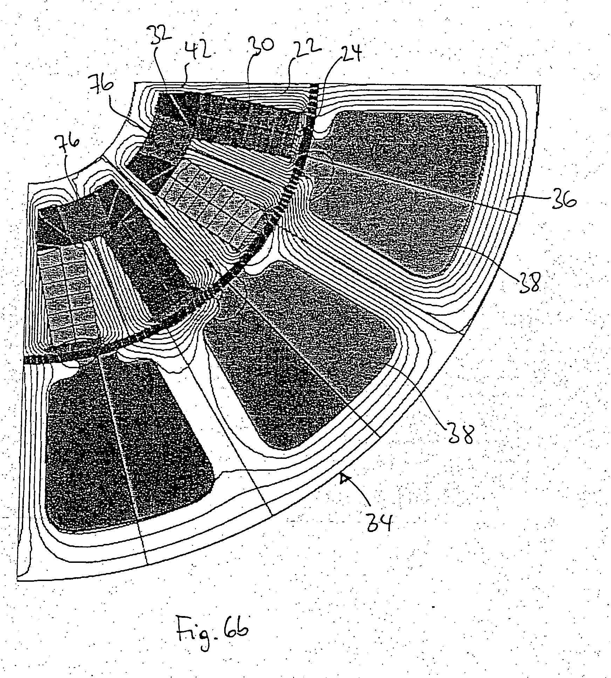

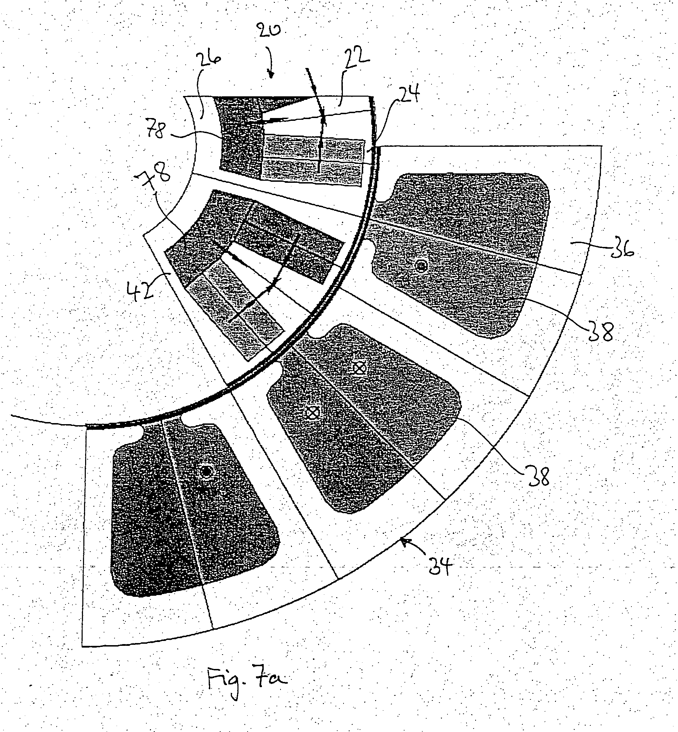

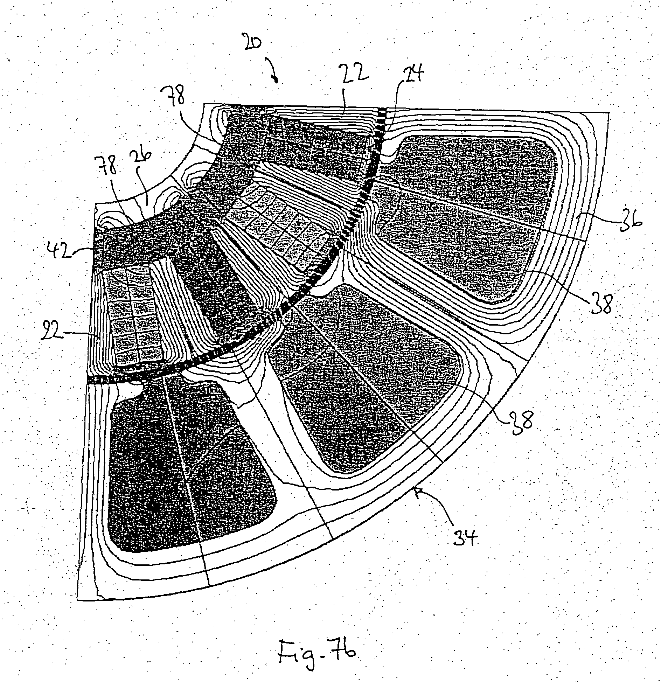

Fig. 6a und 7a zeigen ähnliche Ausführungen wie die Fig. 5a, wobei in den Fig. 6a und 7a die Hilfsmagnete 76 bzw. 78 einen zunehmend größeren Anteil der Aussparung 32 füllen. In der Ausführung der Fig. 7a füllt der Hilfsmagnet 78 die Aussparung vollständig. Die weiteren Komponenten der in den Fig. 6a und 7a gezeigten Rotorkörper entsprechen der Darstellung der Fig. 5a und sind mit denselben Bezugszeichen gekennzeichnet.

Die Fig. 6b und 7b zeigen entsprechende Darstellungen des erfindungsgemäßen Rotorkörpers, in denen die Magnetflußlinien, welche sich im Betrieb des Elektromotors ergeben, ergänzt sind.

Schon aus den Darstellungen der Fig. 5a, 6a und 7a wird deutlich, daß die Ausbildung des Hilfsmagneten zahlreiche Abwandlungen erfahren kann. Auch können unterschiedlich ausgebildete Hilfsmagnete bei sämtlichen Ausführungen eines Rotorkörpers, die mit Bezug auf die Fig. 2 bis 4 beschrieben wurden, sowie bei anderen Arten von Rotorkörpern mit eingebetteten Permanentmagneten eingesetzt werden. Auch können die Hilfsmagnete aus einem oder mehreren zusammengesetzten Magneten aufgebaut sein.

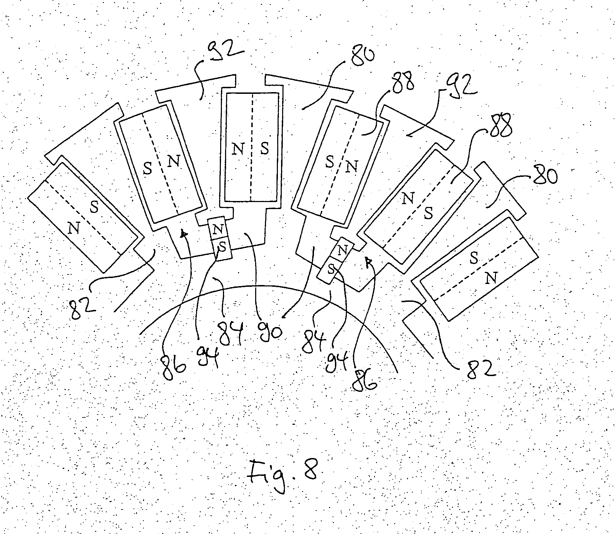

Fig. 8 zeigt eine weitere Ausführung des Rotorkörpers gemäß der Erfindung in einer schematischen Darstellung eines Teils des Rotorkörpers. Der Rotorkörper umfaßt Flußleitstücke 80, welche über radiale Stege 82 und innere Stege 84 bei einer zentralen Öffnung des Rotorkörpers zusammenhängen. Die inneren Stege 84 bilden einen geschlossenen Ring und grenzen dadurch die zentrale Öffnung des Rotorkörpers ein. Zwischen den Flußleitstücken 80 sind Ausstanzungen 86 vorgesehen, die Raum zum Aufnehmen von jeweils zwei benachbarten Permanentmagneten 88 bieten und eine Aussparung 90 zwischen den radial innen liegenden Enden dieser benachbarten Permanentmagnete 88 bilden. Zwischen die benachbarten Permanentmagnete 88 innerhalb einer Aussparung 86 sind weitere Flußleitstücke 92 eingesetzt, wobei die Aussparung 90 zur Aufnahme der Permanentmagnete 88 radial nach außen offen ist; d.h., die Permanentmagnete 88 werden nicht vollständig von den Flußleitstücken 80, 92 umfaßt. Dadurch sind die Flußleitstücke des Rotorkörpers nicht mehr einteilig miteinander verbunden.

Zur Konzentration und Lenkung der Magnetflußlinien sind in den Aussparungen 90 Hilfsmagnete 94 angeordnet. Die Magnetisierungsrichtung der Permanentmagnete 88 und der Hilfsmagnete 94 ist in Fig. 8 durch N und S gekennzeichnet.

Der Vorteil des in Fig. 8 gezeigten Aufbaus des Rotorkörpers ist, daß der Magnetfluß noch stärker konzentriert werden kann und dadurch der Magnetfluß vom Rotor zum Stator weiter zunimmt, was die Effektivität und die maximale Leistung des Elektromotors weiter erhöht

Um die Permanentmagnete 88 in radialer Richtung gegen die Wirkung der Zentrifugalkraft zu sichern, weisen die einzelnen Flußleitstücke 80, 92 an ihrem Außenumfang Nasen zur Halterung der Permanentmagnete 88 auf. Bei der in Fig. 8 gezeigten Ausführung ist es zweckmäßig, den Rotorkörper insgesamt mit Kunststoff zu umspritzen oder zu vergießen. Selbstverständlich kann ein Umspritzen oder Vergießen des Rotorkörpers auch bei allen anderen Ausführungen vorgesehen werden.

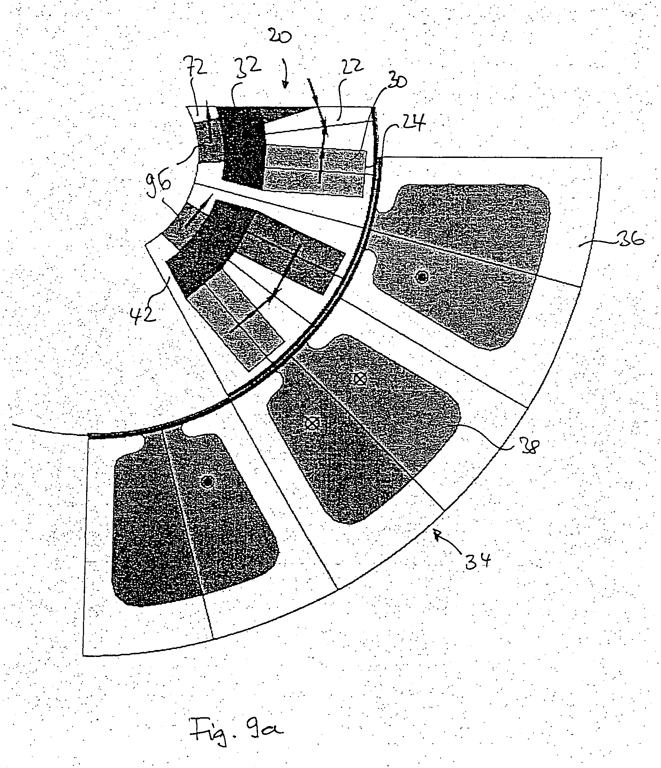

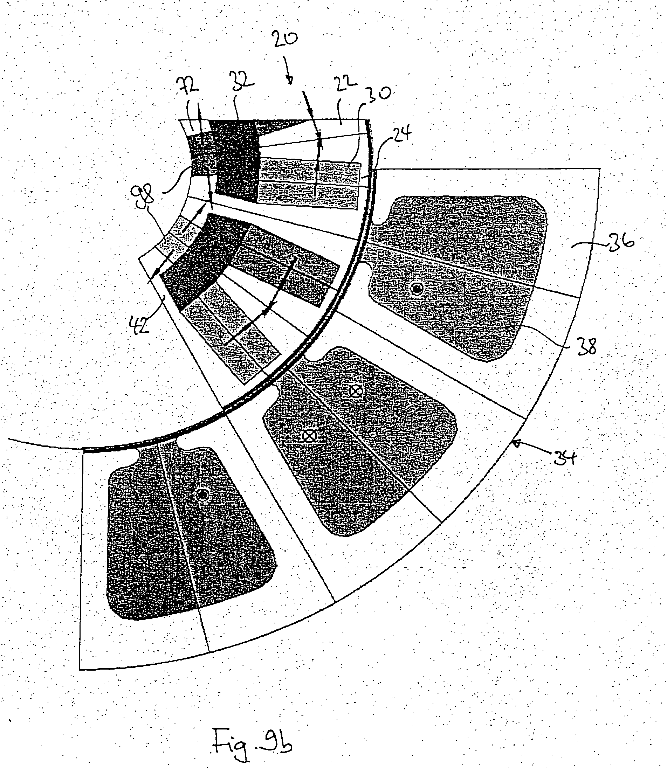

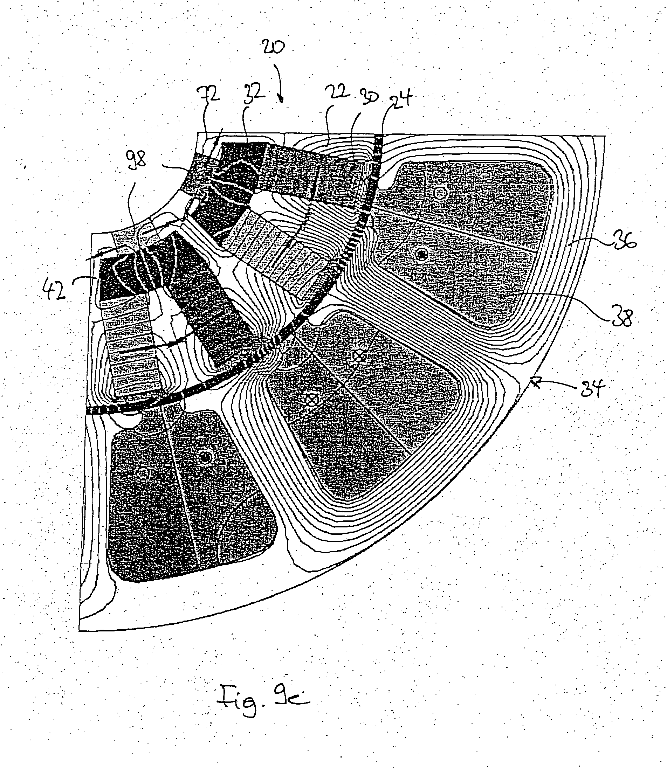

Fig. 9a und 9b zeigen weitere Ausführungen des erfindungsgemäßen Rotorkörpers, welche im wesentlichen auf der in Fig. 4a gezeigten Variante des Rotorkörpers basieren. Bei den Ausführungen der Fig. 9a und 9b sind die Hilfsmagnete 96, 98 nicht innerhalb der Aussparung 32 sondern im Bereich der innenliegenden Stege 72 in den Rotorkörper integriert. Die weiteren Komponenten der in den Fig. 9a und 9b gezeigten Ausführungen sind wie mit Bezug auf Fig. 4a beschrieben und werden mit denselben Bezugszeichen gekennzeichnet. Auf vorstehende Beschreibung wird Bezug genommen. Die im Bereich der inneren Stege 72 angeordneten Hilfsmagnete 96, 98 können gleichpolig oder gegenpolig magnetisiert sein, wie durch die Pfeile in den Fig. 9a und 9b angedeutet ist. Ferner können sie aus einem oder mehreren Einzelmagneten zusammengesetzt sein. Der Verlauf der Magnetflußlinien für die Ausführung der Fig. 9b ist in Fig. 9c dargestellt.

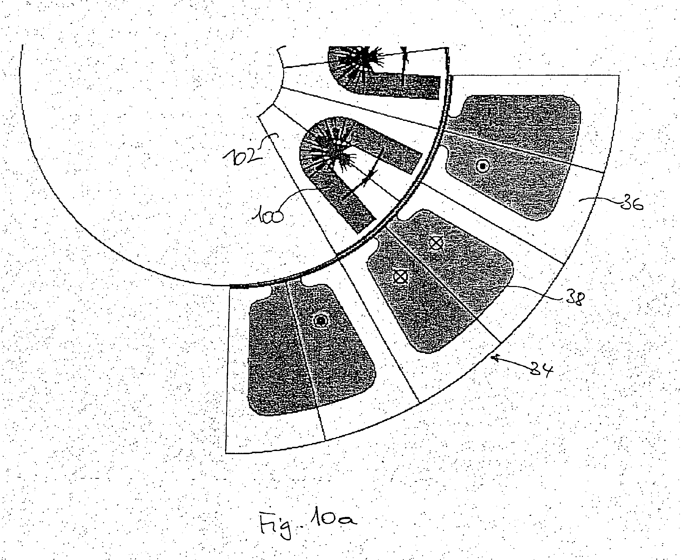

Eine nochmals weitere Ausführung des erfindungsgemäßen Rotorkörpers ist schematisch in Fig. 10a dargestellt. Bei dieser Ausführung werden zwei benachbarte Permanentmagnete und der zugehörige Hilfsmagnet durch einen einzigen, U-förmigen, V-förmigen oder ähnlich geformten Magneten ersetzt. In anderen Worten ist der Hilfsmagnet mit jeweils zwei benachbarten Permanentmagneten 100 einteilig ausgebildet. Der Rotorkörper 102 weist vorzugsweise geeignete V-förmige oder V-förmige Ausstanzungen auf, in welche der Magnet 100 eingeschoben werden kann. Die Magnetisierungsrichtung der beiden Schenkel sowie des Scheitelbereichs des Magneten sind in Fig. 10a durch Pfeile angedeutet.

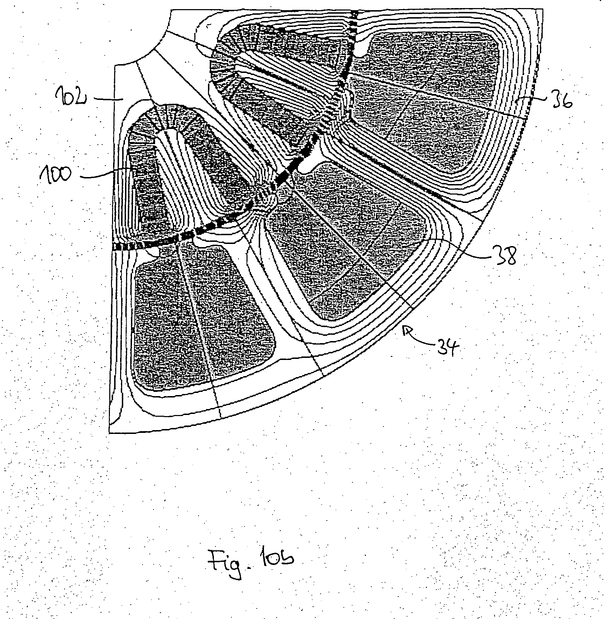

Fig. 10b zeigt den Verlauf der magnetischen Flußlinien im Betrieb der Ausführungsform der Fig. 10a. Es ist erkennbar, daß im Bereich des Innenrings des Rotorkörpers kein magnetischer Streufluß auftritt.

Wie sich aus der obigen Beschreibung ergibt, sind zahlreiche Modifikationen des erfindungsgemäßen Rotorkörpers möglich. Auch können die verschiedenen Aspekte der einzelnen Ausführungsformen bezüglich der Anordnung, Formung und Magnetisierung der Permanentmagnete, bezüglich der Anordnung, Ausformung und Magnetisierung der Hilfsmagnete, bezüglich der Ausbildung der Aussparungen sowie bezüglich anderer, oben beschriebener Parameter nach Bedarf beliebig kombiniert werden.

Ein Motor mit halber Polzahl im Verhältnis zu den oben beschriebenen Motoren kann dadurch erzeugt werden, daß jeweils zwei nebeneinanderliegende, aufeinanderfolgende Permanentmagneten dieselbe Magnetisierungsrichtung haben, oder dadurch, daß jeder zweite Permanentmagnet weggelassen wird und der entsprechende Raum zur Aufnahme dieses Permanentmagneten leer bleibt.

Die in der vorstehenden Beschreibung, den Ansprüchen und den Zeichnungen offenbarten Merkmale können sowohl einzeln als auch in beliebiger Kombination für die Verwirklichung der Erfindung von Bedeutung sein.

### Bezugszeichenliste

- 10: Rotorkörper
- 12: Welle
- 14: Hülse
- 16: Flußleitstücke
- 18: Permanentmagnete
- 20: Rotorkörper
- 22: Flußleitstücke, Rotorkern
- 24,26: Stege
- 28: zentrale Öffnung
- 30: Permanentmagnete
- 32: Aussparung
- 34: Stator
- 36: Statorkörper
- 38: Statorwicklungen
- 40: Flußlinien
- 42: radiale Stege
- 44: Rotorkörper
- 46: Flußleitstücke, Rotorkern
- 48, 50: Stege
- 52: zentrale Öffnung
- 54, 54': Permanentmagnete
- 56: radiale Stege
- 58: Aussparungen
- 60: Stator
- 62: Luftspalt
- 64: Statorkörper
- 66, 66': Phasenwicklungen
- 68: Einkerbungen
- 70: Schlitze
- 72: Stegstummel
- 74: Hilfsmagnet
- 76: Hilfsmagnet
- 78: Hilfsmagnet
- 80: Flußleitstücke
- 82: radiale Stege
- 84: innere Stege
- 86: Ausstanzungen
- 88: Permanentmagnete
- 90: Aussparung
- 92: Flußleitstücke
- 94: Hilfsmagnete
- 96, 98: Hilfsmagnete
- 100: U-förmiger Magnet
- 102: Rotorkörper
- 110: Motorwelle
- 112: Eisenrückschluß
- 114: Gehäuse
- 116: Rotoranordnung
- 118: Statoranordnung
- 122: Permanentmagnete
- 124: Flansch
- 126, 128: Lager
- 155: Metallbleche
- 160: Wicklungen

## Patentansprüche

1. Rotorkörper für einen Elektromotor mit
einem im wesentlichen zylindrischen Rotorkern (22) mit einer zentralen Öffnung (28) und mit Permanentmagneten (30), die in den Rotorkern eingebettet sind und sich im wesentlichen speichenförmig durch den Rotorkern erstrecken, wobei
die radial innen liegenden Enden ausgewählter benachbarter Permanentmagnete (30; 88) durch wenigstens einen Hilfsmagneten (74; 76; 78; 94; 96; 98) magnetisch gekoppelt sind.

2. Rotorkörper nach Anspruch 1, **dadurch gekennzeichnet, daß** die radial innen liegenden Enden der ausgewählten benachbarten Permanentmagnete (30; 88) durch eine Aussparung (32; 90) in dem Rotorkern (22) überbrückt sind und der Hilfsmagnet (74; 76; 78; 94) in der Aussparung angeordnet ist.

3. Rotorkörper nach Anspruch 2, **dadurch gekennzeichnet, daß** der Hilfsmagnet (74; 76; 78; 94) die Aussparung (32; 90) wenigstens teilweise ausfüllt.

4. Rotorkörper nach Anspruch 2, **dadurch gekennzeichnet, daß** der Hilfsmagnet (78) die Aussparung (32) vollständig ausfüllt.

5. Rotorkörper nach Anspruch 1, **dadurch gekennzeichnet, daß** der Hilfsmagnet (78) die radial innen liegenden Enden der ausgewählten benachbarten Permanentmagnete (30) überbrückt.

6. Rotorkörper nach Anspruch 5, **dadurch gekennzeichnet, daß** der Hilfsmagnet mit den ausgewählten benachbarten Permanentmagneten (100) einteilig ausgebildet ist.

7. Rotorkörper nach Anspruch 1, **dadurch gekennzeichnet, daß** die radial innen liegenden Enden der ausgewählten benachbarten Permanentmagnete (30) durch eine Aussparung (32) in dem Rotorkern (22) überbrückt sind, wobei die Aussparung (32) durch einen umlaufenden Steg (26) bei der zentralen Öffnung (28) des Rotorkerns, die radial innen liegenden Enden der ausgewählten benachbarten Permanentmagnete (30) und radiale Stege (42) eingegrenzt ist, und wobei der Hilfsmagnet (96; 98) in den umlaufenden Steg (26) integriert ist.

8. Rotorkörper nach Anspruch 7, **dadurch gekennzeichnet, daß** der umlaufende Steg (26) Unterbrechungen aufweist, in welche der Hilfsmagnet (96; 98) eingebracht ist.

9. Rotorkörper nach einem der vorangehenden Ansprüche, **dadurch gekennzeichnet, daß** die radial innen liegenden Enden von Paaren benachbarter Permanentmagnete (30; 88) jeweils durch einen Hilfsmagneten (74; 76; 78; 94; 96; 98) magnetisch gekoppelt sind.

10. Rotorkörper nach Anspruch 9, **dadurch gekennzeichnet, daß** die Permanentmagnete eines Paares benachbarter Permanentmagnete jeweils gleichsinnig magnetisiert sind.

11. Rotorkörper nach Anspruch 9, **dadurch gekennzeichnet, daß** die Permanentmagnete eines Paares benachbarter Permanentmagnete jeweils gegensinnig magnetisiert sind.

12. Rotorkörper nach einem der Ansprüche 1 bis 8, **dadurch gekennzeichnet, daß** die Permanentmagnete nach Art von Doppelspeichen in Paaren gleichsinnig magnetisierter Permanentmagnete (54, 54') in dem Rotorkern angeordnet sind, und daß jeweils benachbarte Paare an den radial innen liegenden Enden zweier benachbarter Permanentmagnete (54, 54') durch einen Hilfsmagneten magnetisch gekoppelt sind.

13. Rotorkörper nach einem der vorangehenden Ansprüche, **dadurch gekennzeichnet, daß** der Hilfsmagnet (74; 76; 78; 94; 96; 98) in radialer Richtung magnetisiert ist, um Magnetfeldlinien in dem Zwischenraum zwischen den ausgewählten benachbarten Permanentmagneten (32; 88) zu konzentrieren.

14. Rotorkörper nach einem der vorangehenden Ansprüche, **dadurch gekennzeichnet, daß** die Hilfsmagnete (74; 76; 78; 94; 96; 98) gleichsinnig oder gegensinnig magnetisiert sind.

15. Rotorkörper nach einem der vorangehenden Ansprüche, **dadurch gekennzeichnet, daß** die Permanentmagnete (30; 88) wenigstens an ihren radial innen liegenden Enden oder an ihren radial außen liegenden Enden von dem Rotorkern (22) umschlossen sind.

16. Rotorkörper nach einem der vorangehenden Ansprüche, **dadurch gekennzeichnet, daß** der Rotorkern (22) aus einem ferromagnetischen Material hergestellt ist.

17. Rotorkörper nach einem der vorangehenden Ansprüche, **dadurch gekennzeichnet, daß** der Rotorkern (22) aus paketierten Metallblechen hergestellt ist.

18. Rotorkörper nach einem der vorangehenden Ansprüche, **dadurch gekennzeichnet, daß** der Rotorkern (26) Schlitze aufweist, in welche die Permanentmagnete (30; 88) eingeschoben sind.

19. Elektromotor mit einem Stator und einem Rotor, der einen Rotorkörper nach einem der vorangehenden Ansprüche aufweist, wobei der Rotorkörper auf eine Welle aufgebracht ist und der Stator den Rotor umgibt.
